# EUROPÄISCHE PATENTSCHRIFT

(11) **EP 0 825 322 B1**
(45) Veröffentlichungstag und Bekanntmachung des Hinweises auf die Patenterteilung: **23.07.2003**
(21) Anmeldenummer: 97113366.5
(22) Anmeldetag: 02.08.1997
(51) Int. Cl.: E06B 3/96

(54) **Gehrungseckverbindung für aus Hohlprofilstäben zusammengesetzte Rahmenteile**
Mitre corner joint for frame parts composed of hollow profile rods
Joint d'angle à ouglet pour éléments de cadre composée de barres en profil creux

(30) Priorität: 22.08.1996 DE 19633783
(43) Veröffentlichungstag der Anmeldung: 25.02.1998
(73) Patentinhaber: EDUARD HUECK GmbH & CO. KG, D-58511 Lüdenscheid (DE)
(72) Erfinder: Pfeiffer, Jürgen, 58802 Balve (DE); Schulte, Ernst, 42399 Wuppertal (DE); Hustadt, Achim, 58513 Lüdenscheid (DE)

(56) Entgegenhaltungen:
- EP-A- 0 722 034
- DE-A- 2 149 422
- DE-A- 4 303 877
- DE-A- 4 305 377

## Beschreibung

Die Erfindung betrifft eine Gehrungseckverbindung für aus Hohiprofilstäben zusammengesetzte Rahmenteile, insbesondere für Fenster, Türen und dergleichen, in den Gehrungseckbereichen eingesetzten, einstückigen, jeweils einen Längsschlitz aufweisenden Eckwinkeln, die durch Ablängen eines Strangpreßprofiles hergestellt und mit quer zu den Seitenflächen verlaufenden Hohlräumen versehen sind.

Bei einer Gehrungseckverbindung dieser Art (DE-A 43 05 377) bestehen die Hohlprofilstäbe vorzugsweise aus stranggepreßten Aluminium-Hohlprofilen. Die Lagesicherung erfolgt nicht nur durch die in die Ausnehmungen eingedrückten Materialzungen, sondern zusätzlich durch einen Kleber, der nach dem Zusammenfügen der ebenfalls aus stranggepreßten Hohlprofilshängen mit quer zu den Seitenflächen verlaufenden Hohlräumen bestehenden Eckwinkel und Rahmenprofile durch Bohrungen in den Hohlprofilstäben in die Hohlräume zwischen die Schenkel des Eckwinkels und an die Innenflächen der Hohlprofilstäbe gespritzt wird.

Stranggepreßte einstückige Eckwinkel sind besonders montagefreundlich. Nachteilig ist jedoch, daß bei der Vormontage eines Rahmens der Kleber in den Gehrungseckbereichen unkontrolliert in die Hohlräume des Eckwinkels läuft, so daß sich ein relativ hoher Klebstoffverbrauch und entsprechend hohe Kosten ergeben. Hinzu kommt, daß wegen der unkontrollierten Verteilung des Klebers an den dafür vorgesehenen Klebeflächen die Festigkeit der Verbindung nicht voraussehbar ist.

Um diese Nachteile zu beheben, werden bei auf dem Markt vorhandenen einteiligen Eckverbindern gemäß der DE-OS 43 03 877 an beiden Seiten jedes Eckwinkels Abdeckwinkel mit einer speziellen Kleberführung angeordnet, während die diese aufnehmenden Hohlprofilstäbe in den Gehrungseckbereichen mit zwei lagegerecht dazu stehenden Bohrungen versehen sind, in die der Kleber eingeführt wird. Von Nachteil sind dabei die beiden Abdeckwinkel, weil dadurch auf beiden Seiten jedes Eckwinkels getrennte Kleberführungen notwendig sind.

Aus der EP-A-0 722 034 sind ebenfalls einstückige Eckwinkel bekannt. Diese Eckwinkel besitzen jedoch keinen Längsschlitz und sind nicht aus Strangpressprofilen hergestellt. Auch besitzen sie keine quer zu den Seiten verlaufenden Hohlräume, welche immer dann entstehen, wenn man zur Fertigung von Eckwinkeln ein kostengünstiges Strangpressprofil-Herstellungsverfahren einsetzt. Bei der Entgegenhaltung bestehen die Eckwinkel aus Vollmaterial. Soweit Hohlräume in das Vollmaterial eingearbeitet sind, dienen diese ausschließlich als Kleberführung.

Der Erfindung liegt die Aufgabe zugrunde, ausgehend von einer Gehrungseckverbindung mit einem einstückigen, mit einem Längsschlitz versehenen oder einem zweiteiligen Eckwinkel, die Aufgabe zugrunde, bei einem möglichst geringem Montageaufwand eine kontrollierte, exakt zu bestimmende Klebstofführung bei aufgesetzten Rahmen-Hohlprofilen zu erreichen.

Dies wird nach der Erfindung dadurch erreicht, daß in den Längsschlitz des einstückigen Eckwinkels ein die quer zu den Seitenflächen verlaufenden Hohlräume der Eckwinkel verschließender Abdeckwinkel angeordnet ist. Durch den Abdeckwinkel wird in einfacher Weise verhindert, daß unkontrolliert Kleber in den Längsschlitz des Eckwinkels läuft und sich dadurch ungewollt in den Hohlräumen verteilt. Vielmehr wird durch diesen Vorschlag eine genau definierbare Klebeverbindung mit einem minimalen Verbrauch an Kleber erreicht. Versuche haben gezeigt, daß die Festigkeit aller so hergestellten Gehrungseckverbindungen gegenüber anderen bekannten Verbindungen gleichwertig ist. Da alle Hohlräume durch den Abdeckwinkel verschlossen sind, kann in diese kein Kleber einlaufen. Die Zuführung des Klebers kann von der Mitte aus erfolgen, so daß nur eine Bohrung in jedem Hohlprofilstab notwendig ist.

In weiterer vorteilhafter Ausgestaltung dieses ersten Erfindungsvorschlages ist vorgesehen, daß die äußeren freien Kanten der beiden Schenkel des Abdeckwinkels im Bereich der Ausnehmungen für die ausgestanzten Materialzungen liegen. Dadurch ist es möglich, den Längsschlitz vollständig abzudecken. Um die Lage des Abdeckwinkels genau zu fixieren und in dem Längsschlitz zu verklemmen, ist der Abdeckwinkel zweckmäßig mit seitlichen in die Hohlräume eingreifenden, V-förmig zueinander stehenden Vorsprüngen versehen. Diese Vorsprünge können im Querschnitt kleiner sein als der Hohlraum.

Anhand der Zeichnungen wird die Erfindung nachstehend näher erläutert;

Es zeigen:
- Figur 1: eine erfindungsgemäße Gehrungseckverbindung in einer Seitenansicht,
- Figur 2: einen Eckwinkel für die Gehrungseckverbindung nach Figur 1 in Draufsicht und
- Figur 3: den in den Längsschlitz eingesetzten Abdeckwinkel in zwei Ansichten.

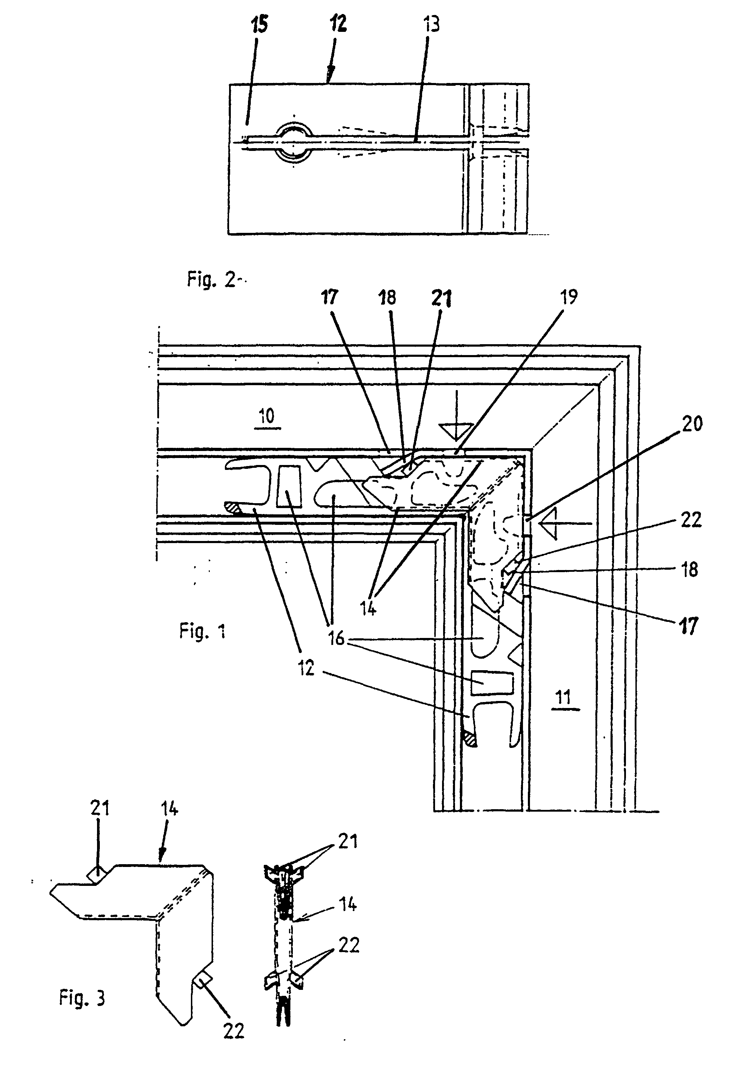

Die in der Figur 1 als ein erstes Ausführungsbeispiel dargestellte Gehrungseckverbindung ist von zwei auf Gehrung geschnittenen Hohlprofilstäben 10, 11, einem noch näher erläuterten, in die Hohlkammern der Hohlprofilstäben 10, 11 eingreifenden Eckwinkel 12 und einem in den Längsschlitz 13 des Eckwinkels 12 eingesetzten Abdeckwinkel 14 gebildet, der'in der Figur 3 als Einzelheit dargestellt ist. Die Hohlprofilstäbe 10, 11 sind vorzugsweise aus Aluminium gefertigt und können aus zwei durch Isolierstege miteinander verbundenen Profilen gebildet sein. Solche Ausführungen werden als Isolier-Verbundprofile bezeichnet. Die Hohlprofilstäbe 10, 11 sind auf Gehrung geschnitten, wobei die Gehrungsschnittfläche aneinanderliegen. Zur Verbindung der beiden Hohlprofilstäbe 10 wird der Eckwinkel 12 verwendet, dessen beide Schenkel in die entsprechenden Hohlräume der Hohlprofilstäbe 10, 11 schließend eingreifen. Die Außen- und die Innenflächen der Schenkel des Eckwinkels 12 sind profiliert, so daß Kleber in die Vertiefungen eindringen kann. Die seitlichen Flächen des Schenkels des Eckwinkels sind glattflächig. Der Längsschlitz 13 erstreckt sich über beide Schenkel hinweg und endet zur Bildung von Brückenstegen 15 in einem geringen Abstand zu freien Enden der Schenkel. Der Eckwinkel 12 ist aus einem stranggepreßten Hohlprofil abgelängt und hat quer zu den Seitenflächen laufende Hohlräume 16. Jeder Schenkel des Eckwinkels 12 ist mit einer dem Längsschlitz 13 zugeordneten Ausnehmung 17 versehen, in die Zungen 18 der anliegenden Wandung des Hohlprofilstabes 10 bzw. 11 eingedrückt sind.

In den Längsschlitz 13 ist der in der Figur 3 als Einzelheit dargestellte z. B. aus dünnwandigem Kunststoff bestehende Abdeckwinkel 14 eingesetzt. Die äußeren Flächen des Abdeckwinkels 14 stehen im Bereich der Gehrungsflächen bündig zu den Außenflächen der Hohlprofilstäbe. Es ergibt sich in Verbindung mit der Figur 1, daß die durch den Längsschlitz 13 entstandenen Öffnungen der Hohlräume 16 durch den Abdeckwinkel 14 verschlossen werden. Dadurch kann ein durch Bohrungen 19, 20 der Wandungen der Hohlprofilstäbe 10, 11 eingespritzter Kleber sich nur kontrolliert in den Vertiefungen verteilen, und nicht in die Hohlräume 16 des Eckwinkels 12 eindringen. Im dargestellten Ausführungsbeispiel sind die Außenflächen der beiden Schenkel des Abdeckwinkels 14 vom Scheitelpunkt aus stufenförmig abgesetzt. Die beiden Innenflächen dagegen sind glattflächig. Außerdem sind die beiden Außenflächen mit jeweils zwei V-förmig zueinander stehenden Vorsprüngen 21, 22 versehen, so daß sich der Abdeckwinkel 14 im Längsschlitz 13 unter Vorspannung verklemmen kann. Die Form des Eckwinkels 12 und der des Abdeckwinkels 14 hängt vom Querschnitt der Hohlprofilstäbe 10, 11 ab.

Um zu erreichen, daß beim Einspritzen von Kleber durch die Bohrungen 19, 20 des Abdeckwinkels der Kleber gezielt nur an dem Schenkel des Abdeckwinkels entlangfließt, der der Kleber-Einfüllbohrung 19 bzw. 20 gegenüberliegt, besitzt der Abdeckwinkel in der Gehrungsebene einen Trennsteg. Der Trennsteg kann den ganzen Querschnitt der Trennebene erfassen, wenn - wie bei dem Beispiel nach Figur 3 - der Querschnitt V-förmig bzw. hohlkehlförmig ausgestaltet ist.

## Patentansprüche

1. Bauelement für eine Gehrungseckverbindung für aus Hohlprofilstäben zusammengesetzte Rahmenteile, insbesondere für Fenster, Türen und dergleichen, mit einem in den Gehrungseckbereich einsetzbaren einstückigen, mit jeweils einem Längsschlitz (13) versehenen Eckwinkel, der durch Ablängen eines Strangpreßprofiles hergestellt und mit quer zu den Seitenflächen verlaufenden Hohlräumen (16) versehen ist, **dadurch gekennzeichnet, daß** in dem Längsschlitz (13) des einstückigen Eckwinkels (12) ein die quer zu den Seitenflächen verlaufenden Hohlräume (16) der Eckwinkel (12) verschließender Abdeckwinkel (14) angeordnet ist.

2. Bauelement für eine Gehrungseckverbindung nach Anspruch 1, **dadurch gekennzeichnet, daß** die äußeren freien Kanten der Schenkel jedes Abdeckwinkels (14) im Bereich der Ausnehmungen dür aus den Wandungen der Hohlpofilstäbe ausgestanzte Materialzungen liegen.

3. Bauelement für eine Gehrungseckverbindung nach Anspruch 1, **dadurch gekennzeichnet, daß** die Außen- oder Seitenflächen des Abdeckwinkels (14) als Klemmteile dienende Vorsprünge (21, 22) aufweisen.

4. Bauelement für eine Gehrungseckverbindung nach einem oder mehreren der Ansprüche 1 bis 3, **dadurch gekennzeichnet, daß** zumindest die Außenflächen der Schenkel des Abdeckwinkels (14) von dessen Scheitelpunkt aus stufenförmig abgesetzt sind.

## Claims

1. Construction element for a mitre corner joint for frame parts, in particular for windows, doors and the like, which are composed of hollow profiled bars, having a one-piece corner bracket which can be inserted into the mitre corner region, is provided with a respective longitudinal slot (13), is produced by cutting an extruded profile to length and is provided with cavities (16) running transversely to the lateral faces, **characterized in that** there is arranged in the longitudinal slot (13) of the one-piece corner bracket (12) a covering bracket (14) which closes the cavities (16) of the corner brackets (12) that run transversely to the lateral faces.

2. Construction element for a mitre corner joint according to Claim 1, **characterized in that** the outer free edges of the limbs of each covering bracket (14) are located in the region of the cutouts for material tongues stamped out of the walls of the hollow profiled bars.

3. Construction element for a mitre corner joint according to Claim 1, **characterized in that** the outer or lateral faces of the covering bracket (14) have projections (21, 22) which serve as clamping parts.

4. Construction element for a mitre corner joint according to one or more of Claims 1 to 3, **characterized in that** at least the outer faces of the limbs of the covering bracket (14) are reduced in a stepped form from the vertex of said covering bracket.

## Revendications

1. Composant pour une jonction d'angle à onglet pour des éléments de cadre composés à partir de barres en profilé creux, en particulier pour des fenêtres, des portes et similaires, comprenant un élément angulaire de coin réalisé d'un seul tenant et susceptible d'être mis en place dans la zone de l'onglet, ledit élément angulaire étant doté d'une fente longitudinale respective (13) et étant réalisé par mise à longueur d'un profilé extrudé présentant des cavités (16) s'étendant perpendiculairement aux faces latérales, **caractérisé en ce que** dans la fente longitudinale (13) de l'élément angulaire de coin (12) d'un seul tenant est agencée une équerre de couverture (14) qui referme les cavités (16) de l'élément angulaire de coin (12), cavités qui s'étendent perpendiculairement aux faces latérales.

2. Composant pour une jonction d'angle à onglet selon la revendication 1, **caractérisé en ce que** les arêtes libres extérieures des bras de chaque équerre de couverture (14) sont disposées dans la région des évidements prévus pour des languettes de matériau estampées à partir des parois des barres en profilé creux.

3. Composant pour une jonction d'angle à onglet selon la revendication 1, **caractérisé en ce que** les surfaces extérieures ou latérales de l'équerre de couverture (14) présente des saillies (21, 22) faisant office de parties de serrage.

4. Composant pour une jonction d'angle à onglet selon l'une ou plusieurs des revendications 1 à 3, **caractérisé en ce que** les surfaces extérieures au moins des bras de l'équerre de couverture (14) sont en retrait en formant un gradin depuis son sommet.
